# DEMANDE DE BREVET EUROPEEN

(11) **EP 1 035 085 A1**
(43) Date de publication de la demande: **13.09.2000**
(21) Numéro de dépôt: 99830122.0
(22) Date de dépôt: 05.03.1999
(51) Int. Cl.: C03C 8/16, C09D 7/00

(54) **Innovation relative à l'utilisation d'un hydrocarbure appelé monoterpène monocyclique défini ici comme limonène, dont la formule brute est C10 H16, dans le domaine de l'industrie de la céramique et du verre, comme solvant, composant, diluant de métaux précieux et de couleurs**

(30) Priorité: 05.03.1999 IT RM980133
(71) Demandeur: Fagioli, Gabriella, 00123 Roma (IT)
(72) Inventeur: Fagioli, Gabriella, 00123 Roma (IT)

(57) **Abrégé**

l'invention relative à l'industrie céramique, à l'industrie du verre, aux fabriques de couleurs et autres du monoterpène monocyclique (limonène), concerne l'utilisation de substances telles que: 1) médium et solvant dans la peinture en général; 2) composant d'or opaque et brillant, de platine, d'argent, de vernis sous une forme liquide, utilisé dans les industries susnommées; 3) diluant et régénérateur des métaux et vernis cités plus haut éventuellement secs.

## Description

**Description de l'invention industrielle**: "L'innovation relative à l'utilisation d'un hydrocarbure appelé *monoterpène monocyclique* défini ici comme *limonène*, dont la formule brute est C10 H16, dans le domaine de l'industrie de la céramique et du verre, comme solvant, composant, diluant de métaux précieux et de couleurs" de Madame Gabriella Fagioli résidente à Rome (Italie), via Dire Daua, 2.

Par rapport à l'état précédent de la technique, on peut souligner que les innovation qui font l'objet de cette invention, ont pour but d'éliminer une série d'inconvénients qui naissent de la difficulté d'employer sous forme liquide l'or, les vernis et les métaux. De telles difficultés se rencontrent dans l'industrie céramique et l'industrie du verre, etc, où il est nécessaire d'employer ces produits sous forme liquide. En effet, de tels amalgames tendent à sécher rapidement justement à cause de leur composition chimique. Leur manipulation est donc compliquées et coûteuse, en raison de la perte du produit lui - même, ou de celle des pinceaux employés (pour lesquels est nécessaire un nettoyage qui s'obtient de façon la plus efficace avec l'essence de thérébentine ou autre solvant qui altère les substances susnommées). En outre, on doit se rappeler que la fluidité, le rendement et en particulier la répartition des couches irrégulières des produits cités, est partiellement résolu en utilisant des produits chimiques hautement toxiques comme, par exemple, l'oxyde de mercure.

Toujours en rapport avec la technique actuelle, on peut faire remarquer que les métaux mentionnés, une fois secs, sont pratiquement irrécupérables: il n'existe pas dans le commerce un produit tel que le *limonène*, qui puisse régénérer de tels composés. L'essence de lavande, communément utilisée, tache l'or et autres matières, les teintant de violet, les condensant et elle ne permet pas une stratification uniforme. Les substituts à l'essence de lavande sont en général des produits chimiques hautement toxiques. L'objectif de l'invention, objet du présent document, a pour but d'éliminer les inconvénients mentionnés. *Le monoterpène monocyclique* extrait des essences d'agrumes et spécifié dans sa formule C10H16, s'incorpore parfaitement à froid aux composés tels que l'or, l'argent, le platine et le vernis métalliques communément employés pour embellir et décorer des objets en céramique et en verre; il rend de tels composés fluides et permet de les étaler en couche très fine, il ralentit le séchage, aide à la cohésion des diverses couches de peinture; il dissout aisément des produits tels que l'or pur, l'or brillant, l'or pour le verre, le platine e l'argent pour toutes sortes de décoration sur verre et à trois cuissons. Il permet de récupérer les composés mentionnés qui seraient déjà secs au contact de l'air, sans modifier la qualité et la coloration. La découverte est aisément employée à la place de l'essence de térébenthine pour la préparation des vernis, des couleurs, des émaux et dans tous le cas où l'essence de térébenthine est nécessaire comme solvant et également pour le nettoyage des pinceaux.

## Revendications

1. A. Composant médium, solvants, diluants et régénérateurs pour or opaque, or brillant, platine, et vernis sous forme liquide à base de *limonène*.
B. Médium, solvants et diluants à base de *limonène* pour couleurs dites "à trois cuissons".
C. Médium, solvants et diluants à base de *limonène* pour vernis, couleurs à l'huile, laques et autres.
